# EUROPÄISCHE PATENTANMELDUNG

(11) **EP 1 803 619 A2**
(43) Veröffentlichungstag der Anmeldung: **04.07.2007**
(21) Anmeldenummer: 06123410.0
(22) Anmeldetag: 03.11.2006
(51) Int. Cl.: B60S 1/34

(54) **Scheibenwischervorrichtung**

(30) Priorität: 28.12.2005 DE 102005062788; 17.02.2006 DE 102006007350
(71) Anmelder: ROBERT BOSCH GMBH, 70442 Stuttgart (DE)
(72) Erfinder: Dietrich, Jan, 77815, Buehl (DE); Hawighorst, Achim, 77830, Buehlertal (DE)

(57) **Zusammenfassung**

Die vorliegende Erfindung betrifft Scheibenwischervorrichtung mit einer Antriebswelle (1) und einem Wischerarm, wobei der Wischerarm eine Nabe aufweist, in der die Antriebswelle (1) drehfest befestigbar ist. Außerdem ist mindestens ein verschiebbares Element (8) vorgesehen, das geeignet ist, so in den Wischerarm und die Antriebswelle (1) einzugreifen, daß der Wischerarm formschlüssig an der Antriebswelle (1) angebracht ist.

## Beschreibung

### Stand der Technik

Die vorliegende Erfindung betrifft eine Scheibenwischervorrichtung gemäß dem Oberbegriff des Patentanspruchs 1 und ein entsprechendes Verfahren zur Befestigung eines Scheibenwischers gemäß dem Oberbegriff des Patentanspruchs 7.

Aus dem Stand der Technik sind Scheibenwischer für Kraftfahrzeuge bekannt, die an kegelstumpfförmigen Endabschnitten von Antriebswellen angebracht sind. Auf dem kegelstumpfförmigen Endabschnitt, der in eine Schraube übergeht, ist eine Rändelung ausgebildet. Die Rändelung des kegelstumpfförmigen Abschnitts greift in eine kegelstumpfförmige Nabe an einem Ende eines Wischerarmes des Scheibenwischers. Die Rändelung verhindert eine Verdrehung des Scheibenwischers relativ zu der Antriebswelle. Die Schraube am Ende der Antriebswelle steht aus der Nabe hervor und greift in eine Mutter ein, so daß der Scheibenwischer an der Antriebswelle befestigt ist und sich aufgrund der eingreifenden Rändelungen relativ zu der Antriebswelle nicht verdrehen kann.

Die Verbindung des Wischerarms mit der Antriebswelle ist eine Preßverbindung. Die Nabe des Wischerarms wird in die Rändelung der Antriebswelle durch eine fest angezogene Mutter gepreßt. Zur Befestigung des Scheibenwischers ist ein Werkzeug erforderlich, um die Mutter anzuziehen. Eine solche Befestigung erfordert einen hohen zeitlichen Aufwand und Befestigungsmittel wie Muttern, Unterlegscheiben und dergleichen.

### Aufgabenstellung

Der vorliegenden Erfindung liegt die Aufgabe zugrunde, eine Scheibenwischervorrichtung, die es ermöglicht den Scheibenwischer ohne Verwendung eines Werkzeugs zu befestigen, und ein entsprechendes Verfahren zu dessen Befestigung an einer Antriebswelle zu schaffen.

Die der Erfindung zugrunde liegende Aufgabe wird durch eine Scheibenwischervorrichtung mit den Merkmalen des kennzeichnenden Teils des Patentanspruchs 1 und ein Verfahren zu dessen Befestigung an einer Antriebswelle mit den Merkmalen des kennzeichnenden Teils des Patentanspruchs 7 gelöst.

Erfindungsgemäß ist mindestens ein verschiebbares Element vorgesehen ist, das geeignet ist, so in den Wischerarm und die Antriebswelle einzugreifen, daß der Wischerarm formschlüssig an der Antriebswelle angebracht ist.

In einer bevorzugten Ausführungsform der Erfindung sind an der Innenwand der Nabe ein Vorsprung und an der Außenwand der Antriebswelle ein Vorsprung ausgebildet sind, und umfaßt das mindestens eine verschiebbare Element ein elastisches Element, das zwischen dem Vorsprung an der Außenwand der Antriebswelle und dem Vorsprung an der Innenwand der Nabe so einsetzbar ist, daß eine Verformung des elastischen Elements erforderlich ist, um den Wischerarm von der Antriebswelle zu lösen.

In einer weiteren bevorzugten Ausführungsform umfaßt das mindestens eine verschiebbare Element einen Riegel, ist an der Antriebswelle eine Ausnehmung vorgesehen, und ist der Riegel an dem Wischerarm in die Ausnehmung einschiebbar angebracht.

In einer Weiterbildung der weiteren bevorzugten Ausführungsform weist der Wischerarm ein Befestigungselement und ein Trägerelement auf, wobei die Nabe in dem Befestigungselement ausgebildet ist, wobei das Befestigungselement mit dem Trägerelement gelenkig verbunden ist, und wobei der Riegel mit dem Trägerelement gelenkig verbunden ist.

In einer weiteren bevorzugten Ausführungsform ist an der Auβenwand der Antriebswelle eine Rändelung ausgebildet, die in eine entsprechende Rändelung an der Innenwand der Nabe eingreifbar ist, oder ist an der Antriebswelle ein Polygon ausgebildet, der in eine entsprechende polygonförmige Innenwand der Nabe eingreifbar ist.

In einer weiteren bevorzugten Ausführungsform sind an der Innenwand der Nabe ein weiterer Vorsprung und an der Außenwand der Antriebswelle ein weiterer Vorsprung ausgebildet, die so zusammenwirken, daß eine relative Bewegung der Antriebswelle zur Nabe entlang der Antriebswelle in einer Richtung begrenzt ist.

Ferner betrifft die Erfindung ein Verfahren zur Befestigung eines Scheibenwischerarms gemäß dem kennzeichnenden Teil des Patentanspruchs 7.

Erfindungsgemäß wird mindestens ein verschiebbares Element nach dem Einführen der Antriebswelle in die Nabe so verschoben wird, daß das verschiebbare Element in den Wischerarm und die Antriebswelle eingreift und der Wischerarm formschlüssig an der Antriebswelle angebracht ist.

In einer bevorzugten Ausführungsform umfaßt das mindestens eine verschiebbare Element ein elastisches Element, das während des Einführens der Antriebswelle in die Nabe entgegen einer Kraft elastisch verformt wird, und wird das elastische Element zwischen einem Vorsprung an der Innenwand der Nabe und einem Vorsprung an der Außenwand der Welle durch die Kraft zurückgeformt.

In einer weiteren bevorzugten Ausführungsform umfaßt das mindestens eine verschiebbare Element einen Riegel, der an dem Wischerarm angebracht ist und in eine Ausnehmung an der Antriebswelle eingeschoben wird.

In einer Weiterbildung der weiteren bevorzugten Ausführungsform wird der Riegel verschoben, indem ein Trägerelement des Scheibenwischerarms, mit dem der Riegel gelenkig verbunden ist, um ein Gelenk gedreht wird, das das Trägerelement mit einem Befestigungselement des Scheibenwischerarms, in dem die Nabe ausgebildet ist, verbindet.

### Ausführungsbeispiele

Im folgenden wird die Erfindung mit Bezugnahme auf die Zeichnungen näher beschrieben. Es zeigen:
FIG. 1 einen Ausschnitt einer Scheibenwischervorrichtung teilweise im Schnitt;
FIG. 2 den Ausschnitt der Scheibenwischervorrichtung aus FIG. 1, wobei ein Riegel aus einer Ausnehmung geschoben ist, indem ein Trägerelement um ein Gelenk gedreht ist,
FIG. 3 eine Darstellung einer Ausführungsform eines elastischen Elements und der Profile einer Innenwand einer Nabe, einer Außenwand einer Antriebswelle und des elastischen Elements; und
FIG. 4 eine Darstellung einer weiteren Ausführungsform eines elastischen Elements und der Profile einer Innenwand einer Nabe und einer Außenwand einer Antriebswelle.

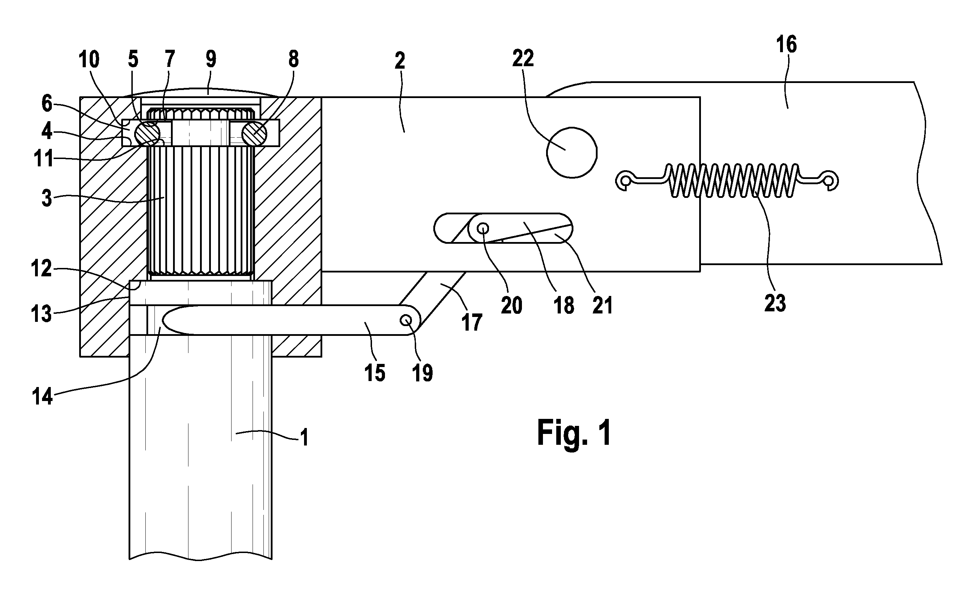

FIG. 1 zeigt einen Ausschnitt einer Scheibenwischervorrichtung. Ein zylinderförmiger Endabschnitt einer Antriebswelle 1, auf dessen Außenwand eine Rändelung 3 ausgebildet ist, ist in eine Nabe eingeführt, die in einem Befestigungselement 2 eines Wischerarmes ausgebildet ist, dabei greift die Rändelung 3 in eine entsprechende Rändelung auf der Innenwand der Nabe ein, so daß der Wischerarm drehfest an der Antriebswelle befestigt ist. Anstelle des zylinderförmigen Endabschnitts kann auch ein polygonförmiger Endabschnitt verwendet werden, der in eine entsprechende polygonförmige Nabe eingreift. Dann sind jedoch die möglichen Einstellungen des Wischerarms zu der Windschutzscheibe stark eingeschränkt. Der als Schnitt dargestellte zylinderförmig verdickte Bereich des Befestigungselements 2, in dem die Nabe ausgebildet ist, ist schraffiert dargestellt. An der Innenwand der Nabe ist ein Vorsprung 4 ausgebildet und an der Außenwand der Antriebswelle ist ein Vorsprung 5 ausgebildet. Die Vorsprünge 4 und 5 gehören zu Aussparungen 6 und 7, die entlang der Innenwand der Nabe beziehungsweise der Außenwand der Antriebswelle 1 ringförmig verlaufen. Zwischen den Vorsprüngen 4 unter 5 ist ein elastisches Element 8 eingesetzt, daß auch im Schnitt dargestellt ist. Das elastische Element 8 besteht aus einem offenen Ring aus Federstahl, der aus einem gebogenen Stab mit zylindrischem Querschnitt gebildet ist. Das elastische Element 8 wirkt mit den Vorsprüngen 4 und 5 so zusammen, daß die Antriebswelle 1 nicht aus der Nabe gezogen werden kann, ohne das elastische Element 8 zu verformen. Zur Verformung des elastischen Elements 8 ist eine Kraft erforderlich, die einem Lösen des Scheibenwischers von der Antriebswelle 1 entgegenwirkt. Das Äußere des elastischen Elements 8 ist dabei so ausgestaltet, daß das elastische Element 8 aufgrund der durch die Vorsprünge 4 und 5 ausgeübten Kraft so verformt wird, daß es entweder in die Aussparung 6 oder in die Aussparung 7 gedrückt wird. Dies wird durch die geeignete Wahl der Größe des Durchmessers des elastischen Elements 8 erreicht. In der entgegengesetzten Richtung wird das elastische Elements 8 mit Vorsprüngen 10 und 11, die zu den Aussparungen 6 und 7 gehören, ebenfalls so zusammen, daß die Antriebswelle 1 nicht weiter in die Nabe geführt werden kann, ohne das elastischen Element zu verformen. Im Sinne der vorliegenden Erfindung schließen verschiebbare Elemente also auch solche Elemente ein, bei denen eine Verschiebung durch eine Verformung des verschiebbaren Elements selbst erreicht wird.

Zur Abdeckung der Öffnung der Nabe ist eine Kappe 9 in diese eingesetzt. An der Innenwand der Nabe ist ringförmig ein weiterer Vorsprung 12 ausgebildet. Der weitere Vorsprung 12 drückt gegen einen entsprechenden Vorsprung 13 an der Außenwand der Antriebswelle 1, so daß die Antriebswelle 1 nicht weiter in die Nabe eingesteckt werden kann. Die weiteren Vorsprünge 12 und 13 gewährleisten eine stabilere Befestigung des Scheibenwischers als die Vorsprünge 10 und 11, so daß diese nicht erforderlich sind. Alternativ zu den Vorsprüngen 10 und 11 können auch die Antriebswelle 1 und die Nabe kegelstumpfförmig ausgebildet sein.

Unter der Rändelung verläuft um die Antriebswelle 1 eine ringförmige Ausnehmung 14. In die ringförmige Ausnehmung 14 ist ein Riegel 15 eingeschoben, wodurch ein Lösen des Scheibenwischers von der Antriebswelle 1 zusätzlich verhindert wird. Der Riegel 15 ist gelenkig mit einen Trägerelement 16 des Scheibenwischerarms über zwei Stangen 17 und 18 und drei Gelenke 19, 20 (das dritte Gelenk wird von dem Befestigungselement 2 verdeckt) verbunden. Das Gelenk 20 ist in einem Langloch 21, daß in dem Befestigungselement 2 ausgebildet ist, verschiebbar befestigt. Anstelle des Langlochs kann auch eine Führung verwendet werden. Das Befestigungselement 2 und das Trägerelement 16 sind durch das Gelenk 22 miteinander verbunden. Eine Feder 23 ist an einem Ende an dem Befestigungselement 2 und an einem anderen Ende an dem Trägerelement 16 befestigt, so daß ein Wischblatt (nicht gezeigt) gegen eine Scheibe eines Fahrzeugs gedrückt wird und der Riegel 15 nur dann aus der Ausnehmung geschoben wird, wenn das Trägerelement entgegen einer Federkraft verdreht wird.

Es ist auch möglich auf die Befestigung durch das Zusammenwirken der Vorsprünge 4, 5 mit dem elastischen Element ganz zu verzichten und nur die Befestigung durch den Riegel 15 zu verwenden. Eine derartige Befestigung ist aufgrund der hohen Kräfte für einen Frontscheibenwischer eventuell nicht ausreichend. Diese Befestigung kann am Frontscheibenwischer aber auch nur dazu verwendet werden, den Scheibenwischer zu befestigen, während ein Wischblatt am Scheibenwischer ausgetauscht wird und die Verbindung mit dem Riegel gelöst ist.

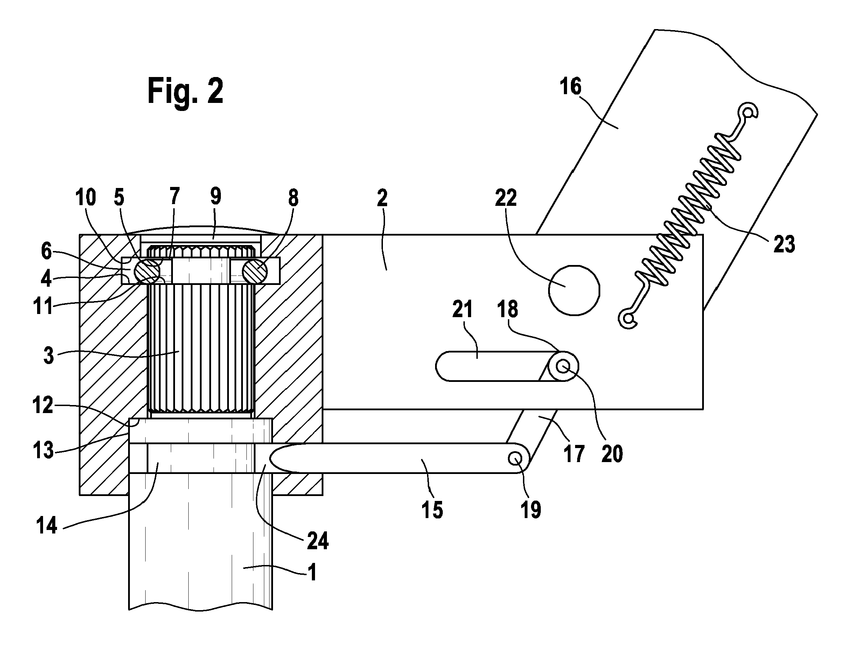

FIG. 2 zeigt den gleichen Ausschnitt der Scheibenwischervorrichtung wie FIG. 1, dabei ist das Trägerelement 16 um das Gelenk 21 gedreht, so daß der Riegel 15 aufgrund der Verbindung mit dem Trägerelement 16 über das Gelenk 19, die Stange 17, das Gelenk 20, das im Langloch 21 verschoben ist, die Stange 18 und das verdeckte Gelenk aus der Ausnehmung 14 geschoben ist. In dem Befestigungselement 2 ist das Loch 24 zum Einschieben des Riegels 15 vorgesehen. Die Verbindung des Riegels 15 mit dem Trägerelement 16 ist nur eine mögliche Ausführungsform, und es kann auf einzelne Gelenke sowie das Langloch verzichtet werden.

Die ringförmige Ausbildung der Aussparungen 6, 7 und der Ausnehmung 14 erlaubt es, den Scheibenwischer an der Antriebswelle 1 in einer beliebigen Ausrichtung zu befestigen. Ist dies nicht erforderlich, so müssen die Aussparung 6, 7 und die Ausnehmung 14 nicht ringförmig ausgebildet sein. Die Feinheit der Ausrichtung ist nur von der Rändelung 3 abhängig.

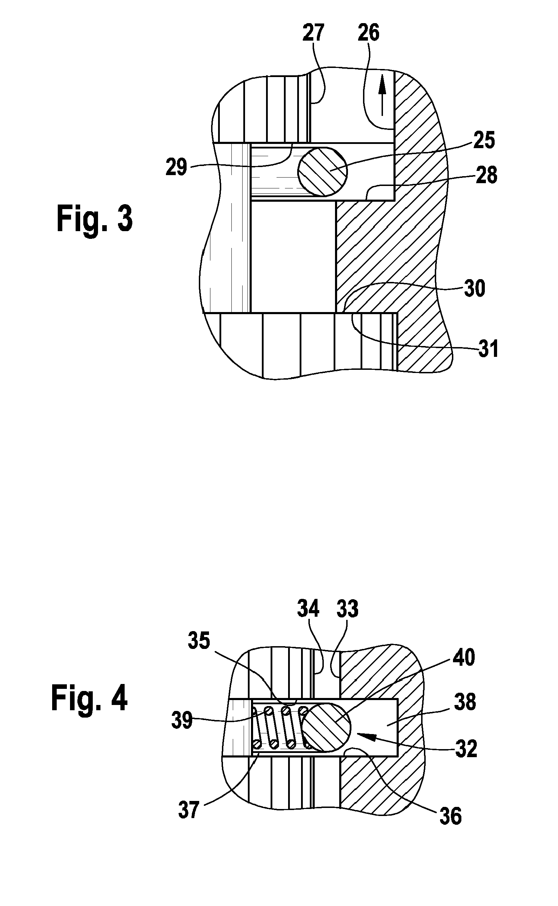

FIG. 3 zeigt eine Ausführungsform eines elastischen Elements 25 und der Profile einer Innenwand 26 der Nabe und einer Außenwand 27 der Antriebswelle 1. Entlang der zylindrischen Innenwand 26 verläuft ringförmig der Vorsprung 28 und entlang der Außenwand 27 verläuft ringförmig der Vorsprung 29. Zwischen ihnen befindet sich das ringförmige Element 25. Die Vorsprünge 28 und 29 gehören nicht zu Aussparungen wie die in den Figuren 1 und 2 gezeigten Vorsprünge 4 und 5. Die Vorsprünge 28 und 29 wirken mit dem im Querschnitt dargestellten elastischen Element 25 so zusammen, daß der Scheibenwischer erst dann entlang der Pfeilrichtung von der Antriebswelle entfernt werden kann, wenn das elastische Element 25 so verformt ist, daß es die Bewegung des Scheibenwischers nicht weiter blockiert. Entgegen der Pfeilrichtung wird die Bewegung des Scheibenwischers durch das zusammenwirken der Vorsprünge 30 und 31 begrenzt. Die Innenwand 26 unter dem Vorsprung 28 kann auch so gestaltet sein, daß sie die Außenwand 28 der Nabe berührt. Aussparungen sind also für das Funktionieren nicht erforderlich. Die Ausbildung zumindest einer Aussparung ist jedoch zur Aufnahme des elastischen Elements empfehlenswert. Dabei wird das elastische Element so ausgestaltet, daß es beim Abnehmen des Scheibenwischers in die Aussparung gedrückt wird. Ein Verlust des elastischen Elements wird dadurch verhindert.

FIG. 4 zeigt eine weitere Ausführungsform eines elastischen Elements 32 und der Profile der Innenwand 33 der Nabe und der Außenwand 34 der Antriebswelle 1. Die Vorsprünge 35,36 gehören zu den Aussparungen 37 und 38. Die Aussparung 37 verläuft nicht notwendigerweise um die gesamte Antriebswelle, sondern kann lediglich ein Loch sein, das irgendwo an der Antriebswelle ausgebildet ist. Um eine beliebige Ausrichtung des Scheibenwischers an der Antriebswelle zu ermöglichen, ist es dann jedoch sinnvoll, die Aussparung 38 ringförmig entlang der gesamten Innenwand 33 der Nabe auszubilden. Das elastische Element 32 besteht aus einer Feder 39, die an einen Ende in der Aussparung 37 befestigt ist, und einem runden Element 40, das am anderen Ende der Feder 39 befestigt ist.

## Patentansprüche

1. Scheibenwischervorrichtung mit einer Antriebswelle (1) und einem Wischerarm, wobei der Wischerarm eine Nabe aufweist, in der die Antriebswelle (1) drehfest befestigbar ist, **dadurch gekennzeichnet, daß** mindestens ein verschiebbares Element vorgesehen ist, das geeignet ist, so in den Wischerarm und die Antriebswelle (1) einzugreifen, daß der Wischerarm formschlüssig an der Antriebswelle (1) angebracht ist.

2. Scheibenwischervorrichtung nach Anspruch 1, **dadurch gekennzeichnet, daß** an der Innenwand der Nabe ein Vorsprung (4) und an der Außenwand der Antriebswelle (1) ein Vorsprung (5) ausgebildet sind, und daß das mindestens eine verschiebbare Element ein elastisches Element (8) umfaßt, das zwischen dem Vorsprung (4) an der Außenwand der Antriebswelle (1) und dem Vorsprung (5) an der Innenwand der Nabe so einsetzbar ist, daß eine Verformung des elastischen Elements (8) erforderlich ist, um den Wischerarm von der Antriebswelle (1) zu lösen.

3. Scheibenwischervorrichtung nach Anspruch 1 oder Anspruch 2, **dadurch gekennzeichnet, daß** das mindestens eine verschiebbare Element einen Riegel (15) umfaßt, daß an der Antriebswelle (1) eine Ausnehmung (14) vorgesehen ist, und daß der Riegel (15) an dem Wischerarm in die Ausnehmung (14) einschiebbar angebracht ist.

4. Scheibenwischervorrichtung nach Anspruch 3, **dadurch gekennzeichnet, daß** der Wischerarm ein Befestigungselement (2) und ein Trägerelement (16) aufweist, wobei die Nabe in dem Befestigungselement (2) ausgebildet ist, wobei das Befestigungselement (2) mit dem Trägerelement (16) gelenkig verbunden ist, und wobei der Riegel (15) mit dem Trägerelement (16) gelenkig verbunden ist.

5. Scheibenwischervorrichtung nach einem der vorhergehenden Ansprüche, **dadurch gekennzeichnet, daß** an der Außenwand der Antriebswelle (1) eine Rändelung (3) ausgebildet ist, die in eine entsprechende Rändelung an der Innenwand der Nabe eingreifbar ist, oder daß an der Antriebswelle ein Polygon ausgebildet ist, der in eine entsprechende polygonförmige Innenwand der Nabe eingreifbar ist.

6. Scheibenwischervorrichtung nach einem der vorhergehenden Ansprüche, **dadurch gekennzeichnet, daß** an der Innenwand der Nabe eine weiterer Vorsprung (12) und an der Außenwand der Antriebswelle (1) ein weiterer Vorsprung (13) ausgebildet sind, die so zusammenwirken, daß eine relative Bewegung der Antriebswelle (1) zur Nabe entlang der Antriebswelle (1) in einer Richtung begrenzt ist.

7. Verfahren zur Befestigung eines Scheibenwischerarms mit einer Nabe an einer Antriebswelle (1), **dadurch gekennzeichnet, daß** mindestens ein verschiebbares Element nach dem Einführen der Antriebswelle (1) in die Nabe so verschoben wird, daß das verschiebbare Element in den Wischerarm und die Antriebswelle (1) eingreift und der Wischerarm formschlüssig an der Antriebswelle (1) angebracht ist.

8. Verfahren zur Befestigung eines Scheibenwischerarms mit einer Nabe an einer Antriebswelle (1), **dadurch gekennzeichnet, daß** das mindestens eine verschiebbare Element ein elastisches Element (8) umfaßt, das während des Einführens der Antriebswelle (1) in die Nabe entgegen einer Kraft elastisch verformt wird, und daß das elastische Element (8) zwischen einem Vorsprung (4) an der Innenwand der Nabe und einem Vorsprung (5) an der Außenwand der Welle durch die Kraft zurückgeformt wird.

9. Verfahren zur Befestigung eines Scheibenwischerarms mit einer Nabe an einer Antriebswelle nach Anspruch 7 oder Anspruch 8, **dadurch gekennzeichnet, daß** das mindestens eine verschiebbare Element einen Riegel (15) umfaßt, der an dem Wischerarm angebracht ist und in eine Ausnehmung (14) an der Antriebswelle (1) eingeschoben wird.

10. Verfahren zur Befestigung eines Scheibenwischerarms mit einer Nabe an einer Antriebswelle nach Anspruch 9, **dadurch gekennzeichnet, daß** der Riegel (15) verschoben wird, indem ein Trägerelement (16) des Scheibenwischerarms, mit dem der Riegel (15) gelenkig verbunden ist, um ein Gelenk (22) gedreht wird, das das Trägerelement (16) mit einem Befestigungselement (2) des Scheibenwischerarms, in dem die Nabe ausgebildet ist, verbindet.
